# EUROPÄISCHE PATENTSCHRIFT

(11) **EP 1 290 628 B1**
(45) Veröffentlichungstag und Bekanntmachung des Hinweises auf die Patenterteilung: **11.02.2004**
(21) Anmeldenummer: 01943247.5
(22) Anmeldetag: 11.04.2001
(51) Int. Cl.: G06K 15/00

(54) **VERFAHREN ZUM ERSTELLEN UND AUSGEBEN MINDESTENS EINER DRUCKSEITE**
METHOD FOR PRODUCING AND OUTPUTTING AT LEAST ONE PRINTED PAGE
PROCEDE DE PRODUCTION ET D'EMISSION D'AU MOINS UNE PAGE IMPRIMEE

(30) Priorität: 11.04.2000 DE 10017893
(43) Veröffentlichungstag der Anmeldung: 12.03.2003
(73) Patentinhaber: Océ Printing Systems GmbH, 85586 Poing (DE)
(72) Erfinder: ENGBROCKS, Werner, 85586 Poing (DE)
(74) Vertreter: Schaumburg, Thoenes, Thurn Patentanwälte
(86) Internationale Anmeldenummer: PCT/EP2001/004193
(87) Internationale Veröffentlichungsnummer: WO 2001/078000

(56) Entgegenhaltungen:
- EP-A- 0 801 357
- EP-A- 0 981 111
- US-A- 5 398 289
- US-A- 5 931 586

## Beschreibung

Die Erfindung betrifft ein Verfahren zum Erstellen und Ausgeben mindestens einer Druckseite. Mit Hilfe eines ersten Programmoduls wird mindestens eine Druckseite erstellt, die mehrere Blöcke enthält. Jeder Block enthält erste Bilddaten von Bildelementen. Eine Ausgabeeinheit gibt auf der Grundlage zweiter Bilddaten Bildelemente aus, deren Bildeigenschaften durch Ausgabeparameter festgelegt werden. Die Ausgabeeinheit gibt die Druckseite mit den an die Ausgabeparameter angepaßten Bilddaten aus. Weiterhin betrifft die Erfindung ein Computerprogramm sowie ein System zum Durchführen des Verfahrens.

Bei Datenverarbeitungssystemen werden Bilddaten von Druckseiten auf Ausgabeeinheiten, z.B. auf Bildschirmen und auf Druckern, ausgegeben. Die Druckseiten werden mit Hilfe eines ersten Programmoduls erstellt, z.B. mit Hilfe eines Textverarbeitungsprogramms, eines Formulareditors oder eines DTP-Programmoduls. Zur Ausgabe der Bilddaten müssen diese Bilddaten umgewandelt werden, damit die jeweilige Ausgabeeinheit diese Daten verarbeiten kann. Diese Umwandlung wird z.B. mit Hilfe eines Druckertreiber-Programmoduls bei der Ausgabe der Druckseite durch einem Drucker oder mit Hilfe eines Bildschirmtreiber-Programmoduls bei der Ausgabe der Druckseite auf einer Anzeigeeinheit durchgeführt. Druckertreiber- und Bildschirmtreiber-Programmodule werden auch als Ansteuerprogrammodule bezeichnet.

Für unterschiedliche Drucker mit unterschiedlichen Ausgabeparametern sowie für unterschiedliche Druckertypen ist jeweils ein Druckertreiber-Programmmodul vorhanden. In dem Druckertreiber-Programmmodul lassen sich für alle zu druckenden Druckseiten die Ausgabeparameter des Druckers, vorzugsweise in Formularen, in sogenannte Registerkarten, des Druckertreiber-Programmmoduls, voreinstellen. Dabei können Standardparameter, wie z.B. der Kontrast, die Helligkeit, eine Reduzierung der möglichen Ausgabeauflösung des Druckers, die Papierzufuhr, das Papierformat, die gewünschte Farbmischung und die gewünschte Druckdichte, voreingestellt werden. Auch sind je nach Druckertyp Einstellungen zum Aktivieren von Duplexdruckverfahren, zum Aktivieren des Farbdrucks und zur Farbanpassung möglich.

Beim Erstellen der Druckseiten im ersten Programmodul werden bereits bestehende Blöcke, die Bilddaten von Bildelementen enthalten, eingefügt und angeordnet. Bei eingefügten Blöcken, vor allem bei eingefügten Bildern und Grafiken, unterscheiden sich die Bildparameter der Blöcke, vor allem in den Bildparametern Auflösung und Farbtiefe, von den Ausgabeparametern eines Druckers, auf dem die Blöcke zusammen mit weiteren Blöcken der Druckseite ausgegeben werden. Es steht beim Erstellen der Druckseiten oft nicht fest, auf welchem Drucker die Druckseiten ausgegeben werden, da die Ausgabe der Druckseiten oft nicht sogleich nach dem Erstellen der Druckseite erfolgt, sondern zu einem viel späteren Zeitpunkt mit Hilfe einer weiteren Datenverarbeitungsanlage. Infolge der unterschiedlichen Ausgabeparameter der verfügbaren Drucker, auf denen die Druckseite ausgegeben werden kann, stehen die Ausgabeparameter beim Erstellen der Druckseite nicht fest. Die Bildparameter der Blöcke können daher beim Erstellen der Druckseite noch nicht an die Ausgabeparameter des Druckers angepaßt werden.

Die Blöcke haben meist Bildparameter, die die verfügbaren Drucker oft nicht darstellen können. So sind z.B. gebräuchliche Auflösungen von Bildern und Grafiken bei der Bildbearbeitung und bei der Bildverarbeitung 1200 bis 9600 dots pro inch (dpi). Es sind Farbtiefen zwischen 8 und 24 Bit üblich. Eine Farbtiefe von 8 Bit bedeutet, daß z.B. ein Punkt in 256 verschiedenen Farben bzw. in 256 verschiedenen Graustufen dargestellt werden kann. Typische Drucker haben jedoch meist nur eine Auflösung von 150 bis 600 dpi bei einer Farbtiefe von 1 bis 8 Bit. Bei Druckern, die nur eine Farbe, z.B. Schwarz, ausgeben können, muß zusätzlich zu einer Reduzierung der Auflösung noch eine Umwandlung der Farben in Graustufen und gegebenenfalls eine Umwandlung der Graustufen in eine Schwarz/Weiß-Grafik mit Hilfe eines Rasterverfahrens erfolgen. Beim Mehrfarbendruck, z.B. bei einem Zweifarbendruck, muß eine Farbzuordnung getroffen werden.

Bei der Reduzierung der Auflösung und bei einer erforderlichen Farbumwandlung werden die in den Bilddaten der Blöcke enthaltenen Informationen reduziert. Deshalb ist es auch nicht sinnvoll, die Bilddaten der Blöcke z.B. auf 600 dpi und auf eine Farbtiefe von 8 Bit beim Erstellen der Druckseite zu vereinheitlichen. Falls nämlich der Drucker nur eine Auflösung von 300 dpi ausgeben kann, müssen die Bilddaten aller Blöcke nochmals umgewandelt werden. So würde es z.B. vorkommen, daß die Bilddaten einer Grafik mit einer Auflösung von 1200 dpi in Bilddaten einer Grafik mit einer Auflösung von 600 dpi umgewandelt werden; zur Ausgabe auf den Drucker müssen Bilddaten einer Grafik mit 300 dpi erzeugt werden. Somit sind zwei Umwandlungsvorgänge der 1200 dpi Grafik notwendig. Bei jeder Umwandlung gehen Informationen verloren. Beim Umwandeln der Grafik von 600 dpi nach 300 dpi stehen dann nicht mehr alle Informationen zur Verfügung, die in der 1200 dpi Grafik enthalten sind. Eine Grafik mit 300 dpi, die aus der Grafik mit 1200 dpi durch zwei Umwandlungsschritte erzeugt worden ist, ist qualitativ schlechter als eine Grafik mit 300 dpi, die beim Umwandeln in einem einzigen Umwandlungsschritt aus den Bilddaten der Grafik mit 1200 dpi erstellt worden ist.

Bei einigen Blöcken werden beim Erstellen der Druckseite anstatt der Bilddaten Verweise auf Bilddaten in Datenquellen in die Druckseite eingefügt. Die Bilddaten der durch Verweise spezifizierten Blöcke werden dann kurz vor dem Ausdruck von den Datenquellen eingelesen und zusammen mit weiteren Bilddaten der Druckseite an die Ausgabeparameter der Ausgabeeinheit angepaßt und ausgegeben.

Die erstellte Druckseite kann auf verschiedenen Ausgabeeinheiten mit unterschiedlich hohen Ansprüchen an die Qualität der Bilddaten ausgegeben werden. Um einen zu hohen Informationsverlust zu vermeiden, müssen die Bilddaten in hoher Qualität zur Verfügung gestellt werden. Demzufolge ist es nicht zweckmäßig, wie beim Stand der Technik, die Bildparameter dieser Druckdaten schon beim Erstellen der Druckseiten zu vereinheitlichen und/oder an die Ausgabeparameter der Ausgabeeinheit anzupassen. Die aktuellen Daten werden kurz vor dem Ausdruck mit den Bildparametern, mit denen sie in der Datenquelle verfügbar sind, den weiteren Bilddaten der Druckseite hinzugefügt.

Aus der US-Patentschrift US 5,398,289 ist ein Verfahren und ein System bekannt, bei denen ein von einer Bedienperson mit Hilfe eines Programmoduls erzeugtes Dokument objektoptimiert ausgegeben wird. Objektorientierte Wiedergabehinweise können beim Entwerfen des Dokuments zum Spezifizieren des Objekts von der Bedienperson oder automatisch erzeugt werden. Ein Ausgabegerät stellt durch spezielle Hardware- und Softwaremodule Wiedergabe- und Kompressionstechniken zur objektoptimierten Ausgabe bereit. Mit Hilfe der Wiedergabeund Kompressionstechniken wird das jeweilige Objekt vor der Ausgabe in der Ausgabeeinheit anhand der Wiedergabehinweise bearbeitet.

US-A-5 931 586 offenbart ein Verfahren zum Erstellen und Ausgeben einer Druckseite, bei dem mit Hilfe eines ersten Programmoduls mindestens eine Druckseite erstellt wird, die mehrere Blöcke enthält. Jeder Block enthält erste Bilddaten von Bildelementen, wobei jedem Block ein Parameter zugeordnet wird, der Eigenschaften dieses Blocks definiert. Eine Ausgabeeinheit gibt auf Grundlage zweiter Bilddaten (INTERMEDIATE LANGUAGE) Bildelemente aus, deren Bildeigenschaften durch Ausgabeparameter festgelegt sind. Es werden mehrere Bildbearbeitungs-Prozeduren bereitgestellt, die jeweils aus ersten Bilddaten (emulation data) zweite Bilddaten (intermediate language) entsprechend dem Ausgabeparameter der Ausgabeeinheit erzeugen. Ein Programmodul wählt abhängig vom Parameter (emulation) jeden Blocks eine der Prozeduren aus und führt Blockweise die Bilddatenwandlung durch.

Aufgabe der Erfindung ist es, ein Verfahren zum Erstellen und Ausgeben einer Druckseite anzugeben, bei dem eine Ausgabe der Bilddaten auf der Ausgabeeinheit mit einem für den Betrachter qualitativ hochwertigen Erscheinungsbild erfolgt.

Diese Aufgabe wird durch ein Verfahren mit den Merkmalen des Patentanspruchs 1 gelöst. Vorteilhafte Ausgestaltungen der Erfindung werden in den abhängigen Ansprüchen angegeben.

Durch das erfindungsgemäße Verfahren wird erreicht, daß eine Bedienperson beim Erstellen der Druckseite jedem Block einen Darstellungsparameter zuordnet. Dieser Darstellungsparameter kann dabei z.B. die Form eines Zahlencodes oder eines Textcodes haben, der den Blockinhalt beschreibt. Den Darstellungsparametern sind in dem zweiten Programmodul Bildverarbeitungs-Prozeduren zugeordnet, die beim Umwandeln der Bilddaten der einzelnen Blöcke automatisch durchgeführt werden. Die Bildparameter, wie z.B. die Auflösung und die Farbtiefe, werden nicht nur an die Ausgabeparameter der Ausgabeeinheit angepaßt, sondern die Bilddaten einzelner Blöcke werden gemäß individuellen Vorgaben automatisch umgewandelt und automatisch mit Bildbearbeitungsverfahren nachbearbeitet. Beim Durchführen dieser Bildbearbeitungsverfahren werden weitere Ausgabeparameter der Ausgabeeinheit berücksichtigt, wie z.B. die Art und die Festigkeit der Fixierwalze sowie die Eigenschaften des Trägermaterials bei der Ausgabe der Druckseite auf einen Drucker. Das Zuordnen des Darstellungsparameters kann auch automatisch mit Hilfe von spezifischen Merkmalen der Bilddaten, z.B. dem Dateityp der eingefügten Bilddaten, erfolgen. Durch diese individuelle Anpassung der Bilddaten und durch die automatische Auswahl geeigneter Bildverarbeitungs-Prozeduren entsteht ein für den Betrachter qualitativ hochwertiges Erscheinungsbild der einzelnen Blöcke auf der ausgegebenen Druckseite.

Je nach Darstellungsparameter kann die dadurch spezifizierte Bildverarbeitungs-Prozedur bekannte Verfahren, wie z.B. Verfahren zum Kantenglätten, zum Schriftenglätten, zum Weichzeichnen, zur Farbkorrektur, zum Dithern und zum Ändern von Farbübergängen, enthalten. Diese bekannten Verfahren können bei den zugeordneten Bildverarbeitungs-Prozeduren kombiniert und/oder unterschiedlich ausgeprägt sein. Dabei kann auch die Reihenfolge der Durchführung dieser bekannten Verfahren bei den einzelnen Bildverarbeitungs-Prozeduren variieren.

Vorteilhaft ist es auch, Teile der Bildbearbeitungsprozedur von dritten Programmodulen durchführen zu lassen. Einem solchen dritten Programmodul werden die Bilddaten und die für Umwandlung relevante Ausgabeparameter übergeben. Die Übergabe erfolgt vorzugsweise über eine Datenaustausch-Schnittstelle. Eine solche Datenaustausch-Schnittstelle ist z.B. bei dem Betriebssystem "Microsoft Windows" die OLE-Datenaustausch-Schnittstelle (Object Linking and Embedding). Damit ist es möglich, die Bilddaten, die mit dem dritten Programmodul erzeugt sind, auch durch dieses umwandeln zu lassen. Dazu werden z.B. die Bilddaten eines Kreisdiagramms, die mit Hilfe des Microsoft Excel-Programmoduls erzeugt sind, diesem zum Umwandeln zusammen mit den relevanten Ausgabeparametern übergeben. Die umgewandelten Bilddaten werden dann zur Ausgabeeinheit übertragen und von dieser ausgegeben.

In einer vorteilhaften Ausführungsform der Erfindung werden durch den jeweiligen Darstellungsparameter Bildverarbeitungs-Prozeduren ausgewählt, die unterschiedliche Voreinstellungen zur Umwandlung enthalten. So ist es z.B. möglich, bei der Umwandlung die dargestellte Helligkeit einzelner Blöcke der Druckseite für jeden Block individuell anzupassen. Dazu werden den Blöcken unterschiedliche Darstellungsparameter zugeordnet, denen wiederum unterschiedliche Bildverarbeitungs-Prozeduren zugeordnet sind. Diese Bildverarbeitungs-Prozeduren unterscheiden sich mindestens in den Voreinstellungen eines Helligkeitskorrekturverfahrens. Diese unterschiedlichen Voreinstellungen von Bildverarbeitungs-Prozeduren lassen sich auch für alle anderen Anpassungs- und Korrekturverfahren voreinstellen. Dabei sind auch Voreinstellungen möglich, die einzelne Anpassungs- und Korrekturverfahren deaktivieren.

Mit den genannten Maßnahmen lassen sich sehr verschiedene Wirkungen durch die Anpassungs- und Korrekturverfahren erreichen. Dadurch ist es weiterhin möglich, daß eine Bedienperson die Wirkung des jeweiligen Blocks auf einen Betrachter schon beim Erstellen der Druckseite durch die Zuordnung des Darstellungsparameters optimieren kann, obwohl noch nicht feststeht, welche Ausgabeparameter die Ausgabeeinheit hat, auf der die Druckseite zu einem späteren Zeitpunkt ausgegeben wird.

Weiterhin ist es vorteilhaft das erfindungsgemäße Verfahren bei Bilddaten von Blöcken einzusetzen, die Text, Vektorgrafiken, Geschäftsgrafiken, Bilder, Tabellen, Landschaftsfotos und/oder Porträtfotos enthalten. Besonders bei derartigen Bilddaten können bei einer Umwandlung aller Blöcke nach einem einheitlichen Verfahren, wie beim Stand der Technik, Erscheinungen auftreten, durch die Bilddaten einzelner Blöcke minderwertig ausgegeben, werden, obwohl die Ausgabeeinheit, z.B. der Drucker, diese Bilddaten qualitativ besser ausgeben könnte. Durch eine individuelle automatische Umwandlung mit Hilfe des erfindungsgemäßen Verfahrens wird eine optimale Umwandlung der jeweiligen Bilddaten erreicht.

Bei einer Weiterbildung der Erfindung wird die Druckseite mit Hilfe eines ersten Programmoduls, z.B. mit Hilfe eines Textverarbeitungsprogrammoduls, eines DTP-Programmodul und/oder eines Formulargenerators, erstellt, wobei mit Hilfe des ersten Programmoduls die Blöcke durch Verweise auf Datenquellen, z.B. auf Datenbanken, auf Bilddatenbanken oder auf Dateien, eingefügt sind. Zum Einfügen solcher Daten eignen sich besonders in Programmodulen angeordnete Datenaustausch-Schnittstellen. Eine solche Datenaustausch-Schnittstelle ist z.B. bei Programmodulen des Betriebssystems "Microsoft Windows" die OLE-Datenaustausch-Schnittstelle. Dadurch wird erreicht, daß in die Druckseite Blöcke eingefügt sind, die unmittelbar vor dem Umwandeln und vor der Ausgabe der Druckseite von der Datenquelle geladen werden. Somit werden Bilddaten eingefügt, die zum Zeitpunkt des Ausdrucks der Druckseite mit aktuellen Bilddaten der Datenquelle übereinstimmen. Der Aufwand zur Daten- und Druckvorlagenpflege reduziert sich, da nicht alle Druckseiten bei einer Änderung überprüft und angepaßt werden müssen, sondern nur die Einträge in den Datenquellen geändert werden müssen.

Bei einer vorteilhaften Weiterbildung der Erfindung werden bei einer Anforderung einer kundenspezifischen Grafik , z.B. aus variablen Daten bei einem dritten Programmodul die relevanten Ausgabeparameter der Ausgabeeinheit mit übergeben. Die kundenspezifisch erstellte Grafik wird dann schon gemäß der Ausgabeparameter der Ausgabeeinheit erstellt. Dadurch wird erreicht, daß das Programmodul diese Bilddaten entsprechend den Ausgabeparametern der Ausgabeeinheit erzeugt werden. In dem dritten Programmodul sind geeignete Verfahren mit Voreinstellungen vorhanden, die zum Umwandeln dieser Bilddaten besonders geeignet sind. Eine weitere Anpassung dieser Bilddaten auf die Ausgabeparameter der Ausgabeeinheit ist in einem solchen Fall nicht erforderlich. Eine weitere Anpassung dieser Bilddaten entfällt somit. Die Übergabe der Daten an das dritte Programmodul erfolgt vorzugsweise mit Hilfe einer Datenaustausch-Schnittstelle des dritten Programmoduls z.B. mit der OLE-Datenaustausch-Schnittstelle.

Gemäß den Merkmalen des Anspruchs 23 wird eine Computersoftware angegeben, die Befehle und Daten umfaßt, die nach dem Laden der Computersoftware ein Datenverarbeitungssystem bzw. ein Computersystem veranlassen, die in einem der Verfahrensansprüche genannten Schritte auszuführen. Vorteilhaft ist es, diese Computersoftware auf einem Speichermedium zu speichern, um sie in Datenverarbeitungsanlagen zu verarbeiten.

Weiterhin wird ein System mit den Merkmalen des Anspruchs 25 angegeben, das das erfindungsgemäße Verfahren durchführt.

Vorzugsweise ist ein solches System ein Datenverarbeitungs - bzw. ein Computersystem. Mit einem solchen System lassen sich Druckseiten erstellen, wobei die Bilddaten von Blöcken dieser Druckseite so automatisch umgewandelt werden, daß sie an die Ausgabeparameter der Ausgabeeinheit optimal angepaßt sind, auf der sie nach dem Umwandeln ausgegeben werden.

Weitere Merkmale und Vorteile der Erfindung ergeben sich aus der folgenden Beschreibung, welche in Verbindung mit den beigefügten Zeichnungen die Erfindung anhand eines Ausführungsbeispiels erläutert. Es zeigen:
- Figur 1: ein System gemäß einer ersten Ausführungsform der Erfindung, mit dem eine Druckseite erstellt, aufbereitet und ausgedruckt wird,
- Figur 2: ein System, ähnlich dem nach Figur 1, in einer zweiten Ausführungsform der Erfindung,
- Figur 3: ein System nach Figur 1 in einer dritten Ausführungsform der Erfindung,
- Figur 4: schematisch das Erstellen der Druckseite mit Hilfe eines ersten Programmoduls,
- Figur 5: die Druckseite, die mit Hilfe des ersten Programmoduls erstellt und mit Hilfe der Ausgabeeinheit ausgegeben wird, und
- Figur 6: einen Ablaufpan zum Erstellen und Ausgeben einer Druckseite gemäß einer Ausführungsform der Erfindung.

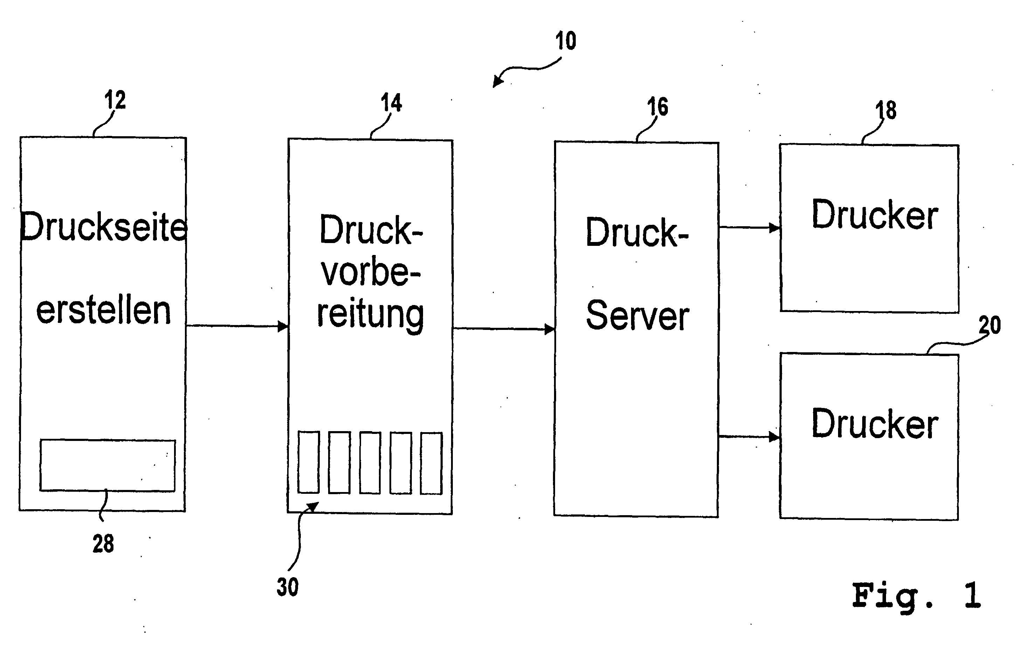

In Figur 1 ist ein Computersystem 10 dargestellt, mit dem eine Druckseite erstellt und mit dem diese Druckseite gemäß einer ersten Ausführungsform der Erfindung aufbereitet und ausgedruckt wird. Die Druckseite wird von einer Bedienperson mit Hilfe eines ersten Programmoduls 28, dem Formulareditorprogrammodul, erstellt. Das Formulareditorprogrammodul 28 wird dabei von einem ersten Computer 12 abgearbeitet. Die Druckseite wird unabhängig von einem Ausgabegerät erzeugt, auf dem diese Druckseite zu einem späteren Zeitpunkt ausgegeben wird. Ein zweiter Computer 14, der Druckvorbereitungscomputer, ist mit einem dritten Computer 16, dem Druckserver, verbunden, an dem zwei Drucker 18 und 20 angeschlossen sind. Der Druckvorbereitungscomputer 14 enthält mehrere Bildverarbeitungs-Prozeduren 30, die zusammen mit weiteren Programmodulen (nicht dargestellt) abgearbeitet werden.

Die mit Hilfe des Formulareditorprogrammoduls 28 erzeugten Druckdaten werden vom ersten Computer 12 zum Druckvorbereitungscomputer 14 übertragen. Zu einem viel späteren Zeitpunkt gibt eine Bedienperson über die Eingabeeinheit (nicht dargestellt) dem Druckvorbereitungscomputer 14 die Anweisung, die Druckseite auf dem Drucker 18 auszugeben. Daraufhin werden die Daten der Druckseite mit Hilfe der Bildverarbeitungsprozeduren in dem Druckervorbereitungscomputer 14 in zweite Daten so umgewandelt, daß sie von dem Drucker 18 weiterverarbeitet und als Druckseite ausgegeben werden können. Die zweiten Daten werden in einer Druckersprache des Druckers 18 an den Druckserver 16 übertragen, der sie an den Drucker 18 weiterleitet. Die Druckersprache des Druckers ist ein Datenformat, in dem die zweiten Daten übertragen und weiterverarbeitet werden. Solche Druckersprachen sind z.B. die PCL-Druckersprache, die AFP-Druckersprache und die Postscript-Druckersprache.

Der Drucker 18 kann Druckseiten mit einer Auflösung von 300 dpi schwarz/weiß ausgeben. Der Drucker 20 kann Druckseiten mit einer Auflösung von 800 dpi im Zweifarbdruck, dem sogenannten Highlightcolor-Druck, ausgeben. Diese betriebsbedingten Eigenschaften der Drucker 18, 20 werden als Ausgabeparameter bezeichnet. Die Bedienperson kann dem Druckvorbereitungscomputer 14 auch die Anweisung geben, die Bilddaten auf dem Drucker 20 auszugeben.

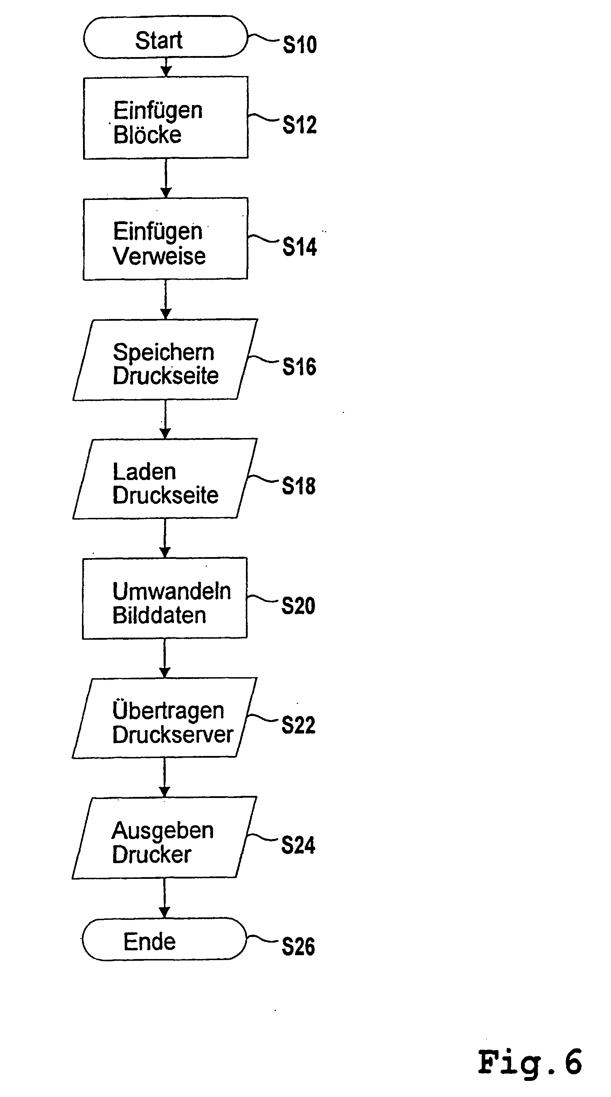

In Figur 6 ist ein Ablaufplan zum Erstellen und Ausgeben einer Druckseite dargestellt. Im Schritt S10 wird der Ablauf gestartet. Die Bedienperson ordnet im Schritt S12 mehrere Blöcke, die jeweils Bilddaten enthalten, auf der zu erstellenden Druckseite an, wie weiter unten noch erläutert wird.

Die von einer Datenquelle abgegebenen Bilddaten der Blöcke werden in die Druckseite unter Berücksichtigung von Bildparametern, wie der Größe und/oder der Skalierung des Blocks, eingefügt. Jeder Block hat typischerweise eine Rechteckform. Andere Formen sind jedoch auch möglich. Weitere Bildparameter, wie Auflösung und Farbtiefe, werden beibehalten, so daß die maximal verfügbaren Informationen der Bilddaten, wie sie von der Datenquelle kommen, erhalten bleiben. Die Bedienperson ordnet diesen Blöcken je einen Darstellungsparameter P zu.

Im Schritt S14 fügt die Bedienperson Verweise in die Druckseite ein, die Daten in Datenquellen spezifizieren. In diesen Datenquellen sind Bilddaten von Blöcken gespeichert, die zu einem späteren Zeitpunkt den im Schritt S12 eingefügten Bilddaten hinzugefügt werden. Die Bedienperson legt jedoch schon jetzt die Größe und die Position des Blocks sowie einen Darstellungsparameter P fest. Ein solches Einfügen wird auch als Einbetten bezeichnet und kann z.B. mit Hilfe einer OLE-Datenaustausch-Schnittstelle erfolgen. Die Daten der Druckseite, die die Bilddaten und die Daten der Verweise enthalten, werden im Schritt S16 in dem ersten Computer 12 gespeichert. Im Schritt S18 lädt der Druckvorbereitungscomputer 14 diese Daten. Die Bilddaten, die durch Verweise spezifiziert sind, werden aus den Datenquellen vom Druckervorbereitungscomputer 14 geladen. Im Schritt S20 werden alle Bilddaten blockweise von je einer Bildverarbeitungs-Prozedur 30 so umgewandelt, daß die Bilddaten des jeweiligen Blocks den Ausgabeparametern des ausgewählten Druckers 18 entsprechen. Das Datenformat der umgewandelten Bilddaten entspricht der Druckerspräche des Druckers 18. Es ist jedoch auch möglich, die Daten blockweise mit Hilfe der Bildverarbeitungs-Prozeduren 30 umzuwandeln und anschließend alle umgewandelten Bilddaten mit Hilfe eines weiteren Programmoduls in Daten umzuwandeln, die der Druckersprache entsprechen. Die Auswahl der Bildverarbeitungs-Prozedur 30 erfolgt dabei mit Hilfe des dem jeweiligen Block zugeordneten Darstellungsparameters P. Die umgewandelten zweiten Bilddaten werden im Schritt S22 vom Druckervorbereitungscomputer 14 zum Druckserver 16 übertragen, der diese an den Drucker 18 weiterleitet. Die Bilddaten der Druckseite werden im Schritt S24 mit Hilfe des Druckers 18 auf einem Trägermaterial ausgegeben. Im Schritt S26 ist der Ablauf beendet.

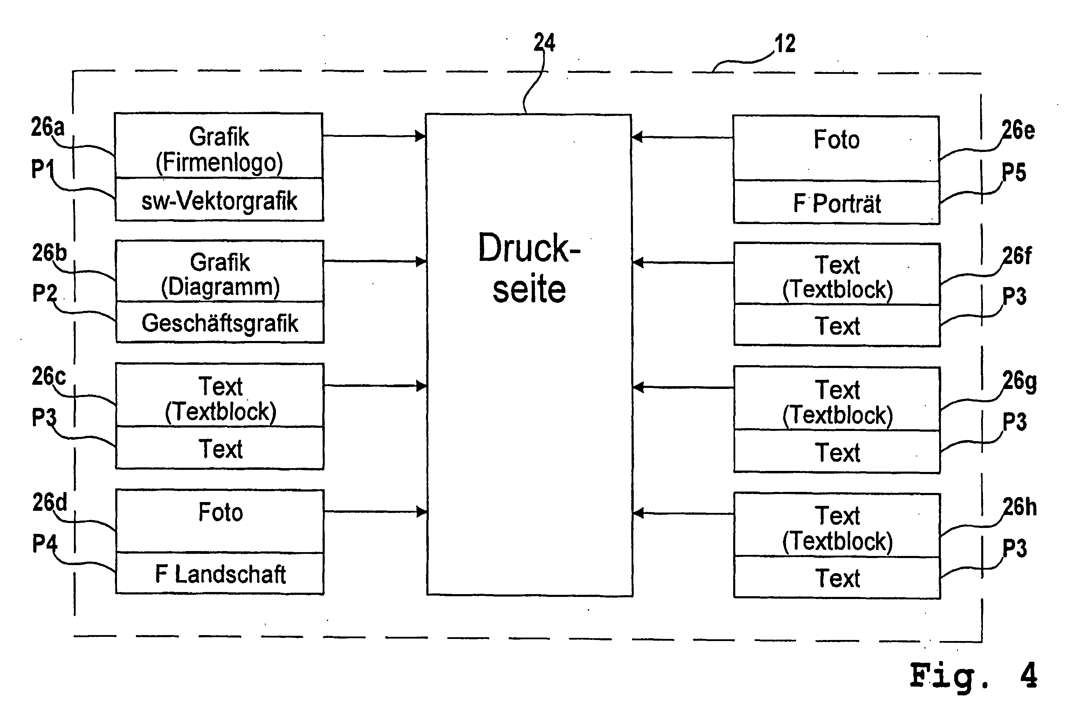

In Figur 4 ist schematisch dargestellt, wie eine Druckseite 24 mit Hilfe des ersten Computers 12 erstellt wird. Die Blöcke 26a bis 26h, allgemein als 26 bezeichnet, die in die Druckseite 24 einzufügen sind, werden aus Datenquellen geladen oder durch eine Bedienperson mit Hilfe von in dem Formulargeneratorprogrammodul 28 enthaltenen Funktionen erstellt. Die geladenen Blöcke 26 werden mit weiteren Funktionen des Formulargeneratorprogrammoduls 28, z.B. in Form und Größe, entsprechend den Vorstellungen der Bedienperson durch diese Funktionen angepaßt und auf der Druckseite 24 angeordnet. Beim Anpassen der einzelnen Blöcke 26 weist die Bedienperson jedem Block 26 einen Darstellungsparameter, allgemein mit P bezeichnet, zu. Die Bedienperson klassifiziert mit Hilfe dieses Darstellungsparameters P die dargestellten Blöcke 26 nach bestimmten Bildeigenschaften.

So wird auf der Druckseite 24 ein Block 26a mit einer Grafik eines Firmenlogos angeordnet. Die Bedienperson weist dieser Grafik 26a den Darstellungsparameter P1 mit der Bedeutung "schwarz/weiß-Vektorgrafik" zu. Auf der Druckseite 24 ist ein weiterer Block 26b mit Grafik, nämlich einem Diagramm, angeordnet, dem die Bedienperson den Darstellungsparameter P2 mit der Bedeutung "Geschäftsgrafik" zuweist. Die Blöcke 26c, 26f, 26g, 26h werden durch die Bedienperson auf der Druckseite 24 angeordnet und mit dem Darstellungsparameter P3 mit der Bedeutung "schwarzer Text" versehen. Ein Block 26d und ein Block 26e, die beide Fotos enthalten, werden von der Bedienperson auf der Druckseite 24 angeordnet. Die Bedienperson weist dem Block 26d den Darstellungsparameter P4 mit der Bedeutung "Foto Landschaft" und dem Block 26e den Darstellungsparameter P5 mit der Bedeutung "Foto Porträt" zu.

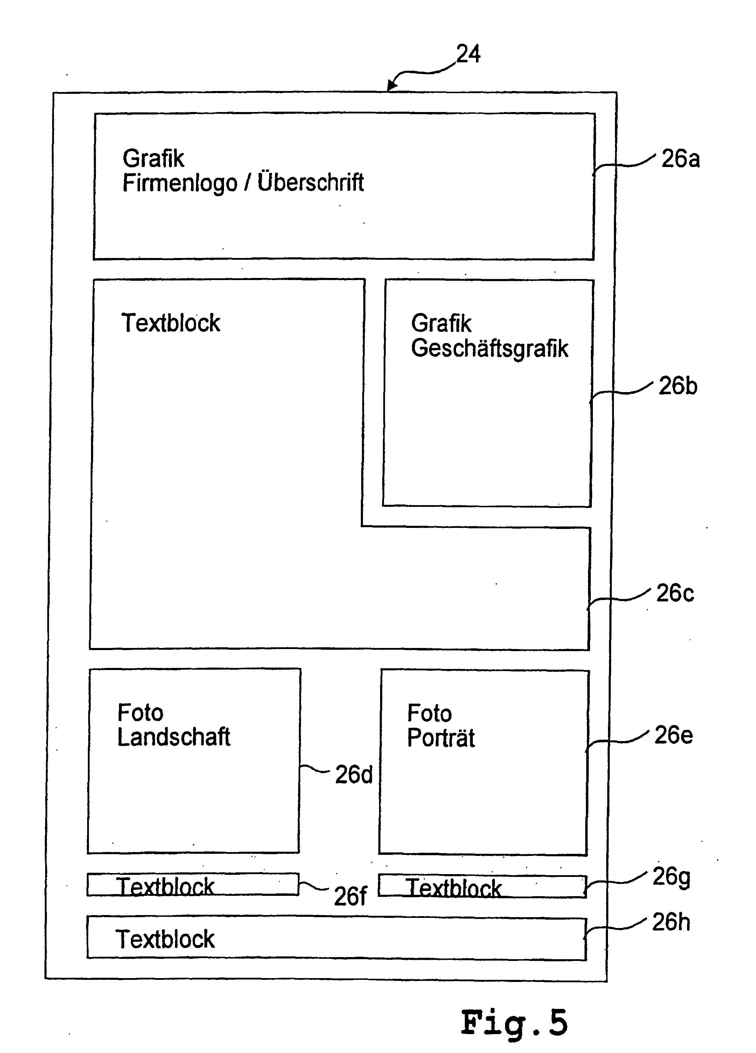

In Figur 5 ist eine Anordnung der Blöcke 26a bis 26h auf der Druckseite 24 als Rechtecke beispielhaft gezeigt. Die Form der Blöcke 26 ist wie erwähnt nicht auf Rechtecke beschränkt. Sie können jede beliebige Form haben. So können sie z.B. auch kreisförmig oder beliebig geformte Vielecke sein.

Die Druckseite 24, die mit Hilfe, des ersten Computers 12 erstellt wurde, wird bei der Anordnung in Figur 1 zu einem Druckvorbereitungscomputer 14 übertragen. Die Druckseite 24 wird auf dem Druckvorbereitungscomputer 14 zu einem späteren Zeitpunkt nach der Übertragung an die Ausgabeparameter des Druckers 18 angepaßt und durch diesen ausgegeben. Der Vorgang, die Druckseite 24 anzupassen und auszugeben, wird von einer Bedienperson durch Eingabe einer Anweisung mit Hilfe der Eingabeeinheit des Druckvorbereitungscomputers 14 aktiviert. Dabei wird mit dieser Anweisung auch festgelegt, auf welchem Drucker 18, 20 die erstellte Druckseite 24 ausgegeben wird. Die Ausgabeparameter und weitere Parameter, wie z.B. die Druckersprache, die Art und die Härte der Fixierwalzen, die Art und die Eigenschaften des Trägermaterials, die Farbeinstellungen (das Colormanagement) der an den Druckserver 16 angeschlossenen Drucker 18, 20 sind in dem Druckvorbereitungscomputer 14 gespeichert. Die Ausgabeparameter und die weiteren Parameter der Drucker werden im folgenden als Ausgabeparameter bezeichnet. Weiterhin sind in dem Druckvorbereitungscomputer 14 die Bildverarbeitungs-Prozeduren 30 gespeichert, die von diesem Druckvorbereitungscomputer 14 abgearbeitet werden können. Den Darstellungsparametern P1 bis P5 ist jeweils eine der Bildverarbeitungs-Prozeduren 30 zugeordnet. Die Ausgabeparameter des ausgewählten Druckers 18, insbesondere die darstellbare Auflösung und die darstellbare Farbtiefe, werden bei den Bildverarbeitungs-Prozeduren 30 berücksichtigt, beispielsweise sind sie voreingestellt. Die Bilddaten der Druckseite 24 werden in dem Druckvorbereitungscomputer 14 blockweise durch Bildverarbeitungs-Prozeduren 30 in zweite Bilddaten umgewandelt. Diese zweiten Bilddaten werden in ihrer Gesamtheit als zweite Druckseite in dem Druckvorbereitungscomputer 14 gespeichert und nach der Umwandlung aller Bilddaten an den Druckserver 16 weitergeleitet. Der Druckserver 16 leitet diese zweiten Daten an den ausgewählten Drucker 18 weiter. Die Auswahl der Bildverarbeitungs-Prozedur 30 erfolgt mit Hilfe des dem jeweiligen Block 26 zugeordneten Darstellungsparameter P1 bis P5. Ist einem Block 26 kein Darstellungsparameter P von der Bedienperson zugeordnet worden, so wird diesem Bildelement 26 automatisch ein Darstellungsparameter P0 zugeordnet. Die Umwandlung der ersten Bilddaten des Blocks 26 in zweite Bilddaten erfolgt dann mit Hilfe der dem Darstellungsparameter P0 zugeordneten Bildverarbeitungs-Prozedur 30.

Aus Performancegründen können die Bilddaten von Blöcken 26 auch in einer Steuereinheit des Druckers 18, 20 an die Ausgabeparameter des Druckers 18, 20 angepaßt werden, wenn diese Steuereinheit geeignete Bildverarbeitungsverfahren durchführen kann. Die anhand des Darstellungsparameters P ausgewählte Bildbearbeitungs-Prozedur 30 überprüft, ob der ausgewählte Drucker 18, 20 die Bilddaten in der Steuereinheit des Druckers 18, 20 umwandeln kann. Ist das der Fall, werden die Bilddaten dem Drucker 18, 20 zum Umwandeln und Ausdrucken übergeben. Unterstützen der Drucker 18, 20 und die verwendete Druckersprache das Bearbeiten von wiederzugebenden Objekten abhängig von objektspezifischen Wiedergabehinweisen, so können diese Wiedergabehinweise auch automatisch aus den Darstellungsparametern P erzeugt werden. Anderenfalls werden diese Bilddaten von den Bildbearbeitungsverfahren der Bildbearbeitungs-Prozedur 30 ungewandelt und anschließend zum Drucker 18, 20 übertragen.

Es sollen z.B. die Bilddaten des Blocks 26d, die ein Landschaftsfoto definieren, wobei diesem Block 26d der Darstellungsparameter P4 mit der Bildeigenschaft "Foto Landschaft" zugeordnet ist, in dem Druckvorbereitungscomputer 14 so umgewandelt werden, daß die Bildparameter des Landschaftsfotos nach dem Umwandeln mit den Ausgabeparametern des Druckers 18 übereinstimmen. Hierzu wird die Bildverarbeitungs-Prozedur 30 zum Umwandeln der Bilddaten ausgewählt, die dem Darstellungsparameter P4 "Foto Landschaft" zugeordnet ist. Das Landschaftsfoto wurde beim Erstellen der Druckseite 24 mit einer Auflösung von 1200 dpi und 8 Bit Farbtiefe in die Druckseite 24 eingefügt. Der Drucker 18 kann jedoch nur einfarbige Druckseiten, d.h. eine Farbtiefe von einem Bit, mit einer Auflösung von 300 dpi ausgeben. Mit der Auswahl des Druckers 18 ist in den durch die Darstellungsparameter P auswählbaren Bildverarbeitungs-Prozeduren 30 die Auflösung von 300 dpi und die Farbtiefe von einem Bit voreingestellt. Durch die durch den jeweiligen Darstellungsparameter P ausgewählte Bildverarbeitungs-Prozedur 30 wird die Umwandlung automatisch vorgenommen. Bei der durch den Darstellungsparameter P4 ausgewählten Bildverarbeitungs-Prozedur 30 mit der Bedeutung "Foto Landschaft" wird neben einem Verfahren zum Umwandeln der Auflösung ein Dithering-Verfahren angewendet. Das Dithering-Verfahren überträgt die Farben des Landschaftsfotos mit Hilfe von Rasterzellen in ein Raster von schwarz/weißen Bildpunkten. Die Parameter des Dithering-Verfahrens sind bei dieser Bildverarbeitungs-Prozedur 30 so voreingestellt, daß ein Betrachter den Ausdruck des umgewandelten Landschaftsfotos durch die Rasterung als eine Vielzahl von Graustufen wahrnimmt. Bei Farbdrucken erfolgt das Rastern für jede verfügbare Prozeßfarbe individuell. Anschließend werden die Bilddaten von der ausgewählten Bildverarbeitungs-Prozedur 30 noch mit Hilfe eines Weichzeichnungsverfahrens umgewandelt, so daß nach dem Umwandeln die dargestellten Bildelemente nur noch allmähliche Graustufenübergänge durch das dargestellte schwarz/weiß Raster haben. Durch das Umwandeln mit Hilfe des Weichzeichnungsverfahrens wird dem Betrachter im Fall des Landschaftsfotos der Eindruck eines qualitativ hochwertigen Bildes vermittelt. Das Landschaftsfoto ist somit gegenüber dem reinen Anpassen der Auflösung und/oder der Farbtiefe durch das durchgeführte Weichzeichnungsverfahren verbessert worden. Das Weichzeichnungsverfahren sowie weitere Korrekturverfahren können bei anderen Ausführungsformen der Erfindung schon bei dem Durchführen des Dithering-Verfahrens mit berücksichtigt werden. Weitere Kombinationen von Bildverarbeitungsverfahren sind denkbar.

Bei dem Umwandeln der Bilddaten des Blocks 26b, das ein Kreisdiagramm darstellt, wird an Hand des Darstellungsparameters P2, mit der Bedeutung "Geschäftsgrafik", die diesem Darstellungsparameter P2 zugeordnete Bildverarbeitungs-Prozedur 30 aktiviert. Das Kreisdiagramm 26b ist mit einer Auflösung von 600 dpi und mit 4 Bit Farbtiefe in die Druckseite 24 eingefügt worden und muß von der ausgewählten Bildverarbeitungs-Prozedur 30 an die Ausgabeparameter schwarz/weiß bei einer Auflösung von 300 dpi angepaßt werden. Wie bei der Bearbeitung des Blocks 26d führt die Bildverarbeitungs-Prozedur 30 mit Hilfe eines bekannten Verfahrens eine Anpassung der Auflösung und ein Dithering-Verfahren durch. Das Dithering-Verfahren wandelt die 16 Farben in ein schwarz/weiß Raster um, das dem Betrachter des ausgegebenen Bildes 16 Graustufen darbietet. Anschließend werden die Bilddaten mit Hilfe eines Hartzeichnungsverfahrens und eines Kantenglätungsverfahrens so bearbeitet, daß der Betrachter präzise Graustufenübergänge sowie präzise und gerade Linien wahrnimmt.

Durch die feste Zuordnung von je einer Bildverarbeitungs-Prozedur 30 zu einem vorbestimmten Darstellungsparameter P ist es möglich, beim Anpassen der Auflösung und/oder der Farbtiefe weitere Korrekturen der Bilddaten automatisch durchzuführen. Diese Korrekturverfahren ermöglichen eine vorteilhafte Darstellung der auf dem ausgewählten Drucker 18 ausgegebenen Bilddaten. Dabei werden bekannte Bildverarbeitungsverfahren angewendet, die nach dem erfindungsgemäßen Verfahren bei dem Umwandeln der Bilddaten automatisch aktiviert und ausgeführt werden.

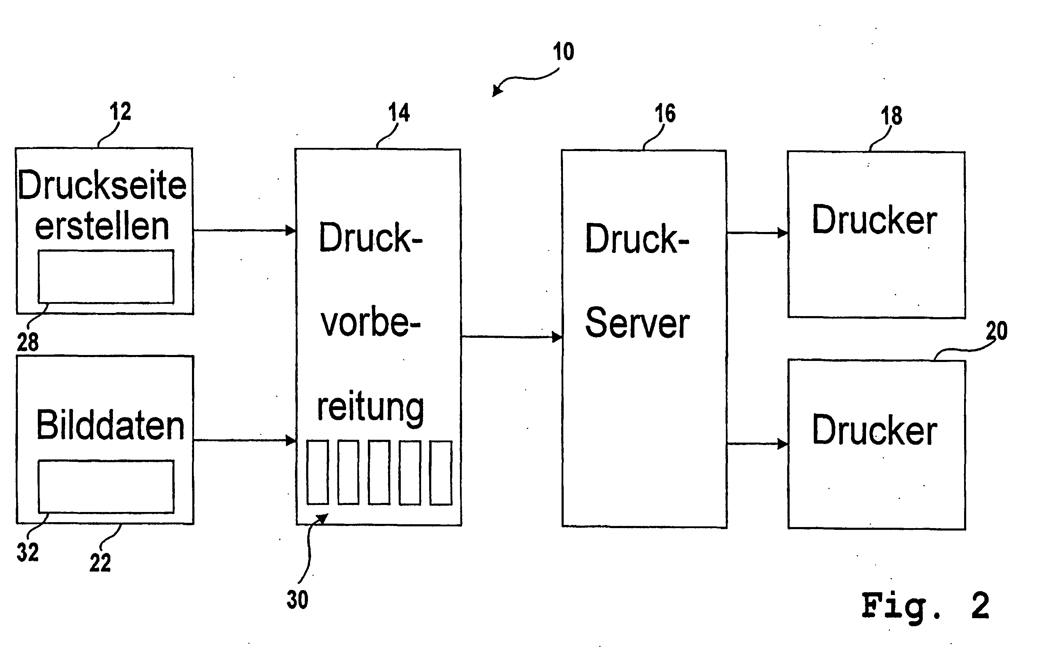

Figur 2 zeigt eine weitere Variante der Ausführungsform der Erfindung nach Figur 1 zum Erstellen und Ausgeben der Druckseite 24. Zusätzlich zu den nach der Figur 1 beschriebenen Elementen enthält, die Anordnung der Figur 2 einen weiteren Computer 22, der aus Daten, die in einer Datenbank gespeichert sind, mit Hilfe eines Diagrammerzeugungs-Programmoduls 32 Bilddaten erzeugt. Diese Bilddaten ergeben bei der Ausgabe auf dem Drucker 18 ein Kreisdiagramm, ähnlich wie Block 26b. Beim Erstellen der Druckseite 24 wird jedoch anstatt des Blocks 26b mit dem Kreisdiagramm ein Verweis auf das Diagrammerzeugungs-Programmodul 32 eingefügt. Dieser Verweis enthält Angaben über die Datenquelle der in dem Kreisdiagramm darzustellenden Daten sowie die Abmessungen des Kreisdiagramms, mit denen es in die Druckseite 24 eingefügt werden soll. Dadurch ist es möglich ein Kreisdiagramm in die Druckseite 24 einzufügen, das erst kurz vor dem Zeitpunkt des Ausdrucks mit aktuellen Daten erstellt worden ist. Die Bilddaten des Kreisdiagramms werden nach dem Erstellen den Bilddaten der anderen Blöcke hinzugefügt und wie in Figur 1 an den voreingestellten Drucker 18 ausgegeben. Der Datenaustausch mit dem Diagrammerzeugungs-Programmodul erfolgt dabei über die OLE-Datenaustausch-Schnittstelle. Der Datenaustausch kann aber auch mit Hilfe einer anderen Datenaustausch-Schnittstelle des Programmoduls 32 erfolgen.

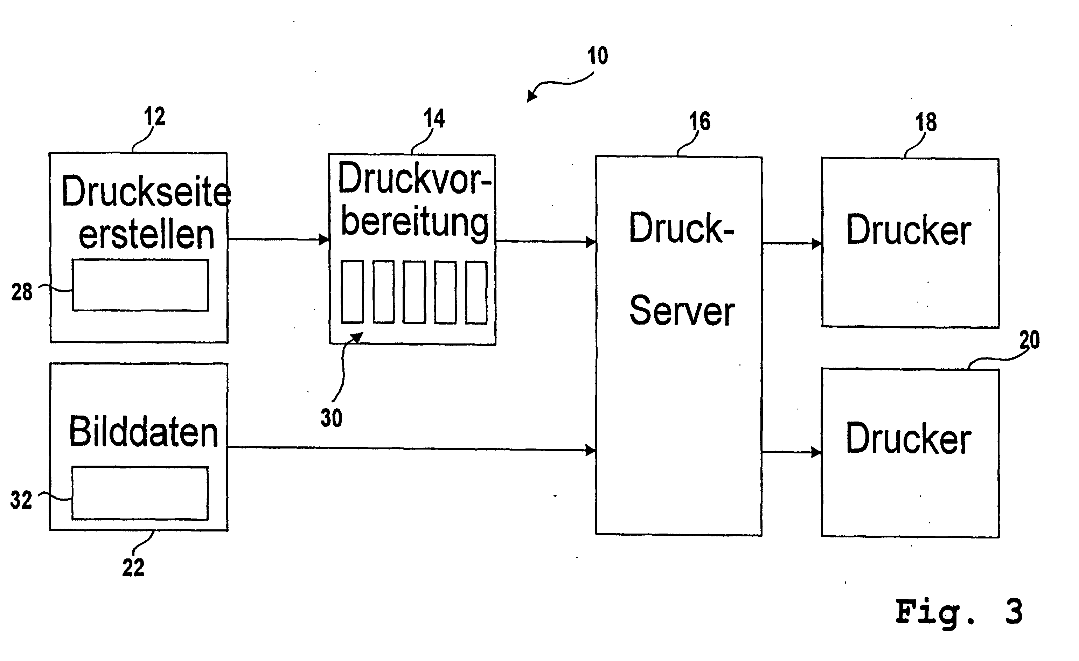

In Figur 3 ist das Computersystem 10 in einer dritten Ausführungsform der Erfindung dargestellt. Wie bei der zweiten Ausführungsform der Erfindung, die in Figur 2 dargestellt ist, werden Bilddaten von einem Computer 22 erzeugt, die erst kurz vor der Ausgabe in die Druckseite 24 eingefügt werden. Die Anforderung der Bilddaten beim Computer 22 enthält zusätzlich die Ausgabeparameter des Druckers 18, auf dem die Druckseite 24 ausgegeben wird. Der Computer 22 erzeugt mit Hilfe des Diagrammerzeugungs-Programmoduls 32 die angeforderten Bilddaten, deren Bildeigenschaften den Ausgabeparametern des ausgewählten Druckers 18 entsprechen. Somit ist es nicht notwendig, diese Daten vom Druckvorbereitungscomputer 14 umwandeln zu lassen. Die in dem Computer 22 erzeugten Bilddaten werden dem Druckserver 16 direkt zugeführt und zusammen mit den anderen Bilddaten von dem Drucker 18 auf dem Trägermaterial ausgegeben.

Werden Bilddaten aus Dateien eingefügt, so ist es auch möglich, diesen Bilddaten anhand ihres Dateityps den Darstellungsparameter P automatisch zuzuordnen. Der Darstellungsparameter P kann auch bei der Erstellung der Bilddaten zugeordnet worden sein und zusammen mit den Bilddaten z.B. in einer Datenbank gespeichert sein. Für diese Blöcke entfällt dann die manuelle Zuordnung der Darstellungsparameter P durch die Bedienperson beim Erstellen der Druckseite 24.

### Bezugszeichenliste

- 10: System
- 12: erster Computer
- 14: Druckvorbereitungscomputer
- 16: Druckserver
- 18,: 20 Drucker
- 22: Computer
- 24: Druckseite
- 26a: bis 26h Blöcke
- 28: erstes Programmodul
- 30: Bildverearbeitungsprozeduren
- 32: Diagrammerzeugungs-Programmodul

- S10 bis S26: Ablaufschritte
- P1 bis P5: Darstellungsparameter

## Patentansprüche

1. Verfahren zum Erstellen und Ausgeben mindestens einer Druckseite,
bei dem mit Hilfe eines ersten Programmoduls (28) mindestens eine Druckseite (24) erstellt wird, die mehrere Blöcke (26) enthält,
jeder Block (26) erste Bilddaten von Bildelementen enthält, wobei jedem Block (26) ein Darstellungsparameter P zugeordnet wird, der Bildeigenschaften dieses Blocks (26) charakterisiert,
eine Ausgabeeinheit (18, 20) auf der Grundlage zweiter Bilddaten Bildelemente ausgibt, deren Bildeigenschaften durch Ausgabeparameter festgelegt werden,
mehrere Bildverarbeitungs-Prozeduren (30) bereitgestellt werden, die jeweils aus ersten Bilddaten zweite Bilddaten entsprechend dem Ausgabeparameter der Ausgabeeinheit (18, 20) erzeugen,
ein zweites Programmodul abhängig vom Darstellungsparameter P eine der Prozeduren (30) auswählt und blockweise die Bilddatenwandlung durchführt,
und bei dem die Ausgabeeinheit (18, 20) die Druckseite (24) mit den Blöcken (26) ausgibt.

2. Verfahren nach Anspruch 1, **dadurch gekennzeichnet, daß** die mit Hilfe des Darstellungsparameters P und des Ausgabeparameter ausgewählte Bildverarbeitungs-Prozedur (30) mehrere Wandlungsprozeduren enthält, wobei die Reihenfolge der Wandlungsprozeduren und die Voreinstellungen der Wandlungsprozeduren durch den Darstellungsparameter P festgelegt ist.

3. Verfahren nach Anspruch 1 oder 2, **dadurch gekennzeichnet, daß** bei der Bildverarbeitungs-Prozedur (30) Änderungen der Bilddaten mit Hilfe von Weichzeichnungs-, Hartzeichnungs-, Kantenglättungs-, Schriftenglättungs- , Segmentierungs-, Farbentiefenänderungs-, Auflösungsänderungs-, Helligkeitsänderungs-, Kontraständerungs- und Farbintensitätsänderungs-Prozeduren durchgeführt werden.

4. Verfahren nach einem der vorhergehenden Ansprüche, **dadurch gekennzeichnet, daß** die Bildverarbeitungs-Prozeduren (30) beim Umwandeln der Bilder zur Ausgabe auf einen Drucker (18, 20) weitere Eigenschaften wie die Art und die Härte der Fixierwalze, das Datenformat des Druckers, die Leistungsmerkmale der Steuereinheit des Druckers (18, 20) zur Bildbearbeitung und die Eigenschaften des Trägermaterials sowie die Einstellungen des Colormanagements berücksichtigen.

5. Verfahren nach Anspruch 3 oder 4, **dadurch gekennzeichnet, daß** die Änderungen der Bilddaten bei einer ersten Bildverarbeitungs-Prozedur (30) gegenüber den einzelnen. Änderungen der Bilddaten bei anderen Bildverarbeitungsprozeduren (30) mit unterschiedlicher Intensität bzw. mit anderen Voreinstellungen durchgeführt werden.

6. Verfahren nach einem der vorhergehenden Ansprüche, **dadurch gekennzeichnet, daß** die Darstellungsparameter P beim Entwerfen der Druckseite (24) festgelegt werden.

7. Verfahren nach einem der vorhergehenden Ansprüche, **dadurch gekennzeichnet, daß** mit Hilfe des ersten Programmoduls (28) eine von den Ausgabeparametern der Ausgabeeinheit (18, 20) unabhängige Druckseite (24) erstellt wird.

8. Verfahren nach einem der vorhergehenden Ansprüche, **dadurch gekennzeichnet, daß** die Ausgabeeinheit (18, 20) eine Druckeinrichtung ist.

9. Verfahren nach einem der vorhergehenden Ansprüche, **dadurch gekennzeichnet, daß** die Blöcke grafische Elemente wie Text, Vektorgrafiken, Geschäftsgrafiken, Bilder, Tabellen, Landschaftsfotos und/oder Porträtfotos enthalten.

10. Verfahren nach einem der vorhergehenden Ansprüche, **dadurch gekennzeichnet, daß** die Ausgabeparameter die Auflösung, die Farbtiefe, Art und Version der Druckersoftware, Druckersprache, Bildverarbeitungsvermögen, Walzenart und das Ausgabemedium der Ausgabeeinheit enthalten.

11. Verfahren nach einem der vorhergehenden Ansprüche, **dadurch gekennzeichnet, daß** das erste Programmodul ein Textverarbeitungsprogrammodul, ein DTP-Programmodul oder ein Formulargenerator ist.

12. Verfahren nach einem der vorhergehenden Ansprüche, **dadurch gekennzeichnet, daß** die Bilddaten der Blöcke (26) aus Datenquellen eingefügt werden.

13. Verfahren nach Anspruch 12, **dadurch gekennzeichnet, daß** die Datenquellen Datenbanken und Bilddatenquellen sind.

14. Verfahren nach Anspruch 12 oder 13, **dadurch gekennzeichnet, daß** als Block ein Verweis verwendet wird, der auf Bilddaten in der Datenquelle verweist.

15. Verfahren nach Anspruch 14, **dadurch gekennzeichnet, daß** die Bilddaten der Blöcke (26) durch das zweite Programmodul vor dem Umwandeln geladen werden, und daß sie anstelle des Verweises in die Druckseite eingefügt werden.

16. Verfahren nach einem der vorhergehenden Ansprüche, **dadurch gekennzeichnet, daß** ein Teil der Blöcke (26) variable Daten enthält.

17. Verfahren nach Anspruch 16, **dadurch gekennzeichnet, daß** die variablen Daten vor dem Erzeugen der zweiten Bilddaten der Blöcke in die Druckseite (24) eingefügt werden.

18. Verfahren nach Anspruch 16 oder 17, **dadurch gekennzeichnet, daß** mit Hilfe eines dritten Programmoduls (32) Bilddaten von Blöcke mit variablen Daten erstellt werden.

19. Verfahren nach Anspruch 18, **dadurch gekennzeichnet, daß** die erstellten Bilddaten von dem dritten Programmodul (32) an die Ausgabeparameter der Ausgabeeinheit (18, 20) angepaßt ausgegeben werden.

20. Verfahren nach Anspruch 19, **dadurch gekennzeichnet, daß** die von dem dritten Programmodul (32) angepaßt ausgegebenen Bilddaten den blockweise gewandelten zweiten Bilddaten vor der Ausgabe der Bilddaten auf der Ausgabeeinheit hinzugefügt wird.

21. Verfahren nach einem der vorhergehenden Ansprüche, **dadurch gekennzeichnet, daß** zum Erzeugen der zweiten Bilddaten durch die Bildverarbeitungs-Prozeduren dritte Programmodule (32) genutzt werden, insbesondere Programmodule (32) mit deren Hilfe die ersten Bilddaten erstellt wurden und das der Datenaustausch mit den dritten Programmodulen (32) mit Hilfe von Datenaustausch-Schnittstellen erfolgt.

22. Verfahren nach einem der vorhergehenden Ansprüche, **dadurch gekennzeichnet, daß** das erste und das zweite Programmodul in separaten Recheneinheiten (12, 14) eines Datenverarbeitungssystems abgearbeitet werden.

23. Computersoftware, umfassend Befehle und Daten in codierter Form, die nach dem Laden der Computersoftware ein Computersystem veranlassen, die in einem der Ansprüche 1 bis 22 genannten Schritte auszuführen.

24. Computersoftware nach Anspruch 23, **dadurch gekennzeichnet, daß** sie auf einem Speichermedium gespeichert ist.

25. System zum Erstellen und Ausgeben mindestens einer Druckseite, mit
- einem ersten Programmodul (28) zum Erstellen mindestens einer Druckseite (24), die mehrere Blöcke enthält, wobei
jeder Block (26) erste Bilddaten von Bildelementen enthält, und jedem Block (26) ein Darstellungsparameter P zugeordnet ist, der Bildeigenschaften dieses Blocks (26) charakterisiert,
- einer Ausgabeeinheit (18, 20), die dazu ausgelegt ist auf der Grundlage zweiter Bilddaten Bildelemente, deren Bildeigenschaften durch Ausgabeparameter festgelegt sind, für die Druckseite mit den Blöcken auszugeben,
- mehreren Bildverarbeitungs-Prozeduren (30), die jeweils aus ersten Bilddaten zweite Bilddaten entsprechend dem Ausgabeparameter der Ausgabeeinheit (18, 20)erzeugen,
- einem zweiten Programmodul, das abhängig vom Darstellungsparameter P eine der Prozeduren (30) auswählt und blockweise die Bilddatenwandlung durchführt.

## Claims

1. Method of creating and outputting at least one print page,
wherein at least one print page (24) that contains a plurality of blocks (26) is created with the assistance of a first program module (28),
each block (26) contains first image data of picture elements, a presentation parameter P that characterizes image properties of this block (26) being allocated to each block (26),
an output unit (18, 20) outputs picture elements on the basis of second image data, the image properties of said picture elements being determined by output parameters,
a plurality of image processing procedures (30) are offered that respectively generate second image data corresponding to the output parameter of the output unit (18, 20) from first image data,
a second program module selects one of the procedures (30) depending on the presentation parameter P and implements the image data conversion block-by-block,
and wherein the output unit (18, 20) outputs the print page (24) with the blocks (26).

2. Method according to claim 1, **characterized in that** the image processing procedure (30) selected with the assistance of the presentation parameter P and the output parameter contains a plurality of conversion procedures, the sequence of the conversion procedures and the pre-sets of the conversion procedures being determined by the presentation parameter P.

3. Method according to claim 1 or 2, **characterized in that** changes in the image data in the image processing procedure (30) are implemented with the assistance of procedures for soft focussing, sharp focussing, edge smoothing, font smoothing, segmenting, colour depth modification, resolution modification, brightness modification, contrast modification and colour intensity modification.

4. Method according to one of the preceding claims, **characterized in that** the image processing procedures (30) take further properties such as the nature and the hardness of the fixing drum, the data format of the printer, the performance features of the control unit of the printer (18, 20) for image processing and the properties of the carrier material as well as the settings of the colour management into consideration in the conversion of the images for the output on a printer (18, 20).

5. Method according to claim 3 or 4, **characterized in that** the changes in the image data in a first image processing procedure (30) are implemented with different intensity or, respectively, with different pre-sets compared to the individual changes in the image data in other image processing procedures (30).

6. Method according to one of the preceding claims, **characterized in that** the presentation parameters P are defined when designing the print image (24).

7. Method according to one of the preceding claims, **characterized in that** a print image (24) that is independent of the output parameters of the output unit (18,20) is created with the assistance of the first program module (28).

8. Method according to one of the preceding claims, **characterized in that** the output unit (18, 20) is a printer device.

9. Method according to one of the preceding claims, **characterized in that** the blocks contain graphics elements such as text, vector graphics, business graphics, pictures, tables, landscape photos and/or portrait photos.

10. Method according to one of the preceding claims, **characterized in that** the output parameters contain the resolution, the colour depth, type and version of the printer software, printer language, image processing capability, drum type and the output medium of the output unit.

11. Method according to one of the preceding claims, **characterized in that** the first program module is a text processing program module, a DTP program module or a forms generator.

12. Method according to one of the preceding claims, **characterized in that** the image data of the blocks (26) are inserted from data sources.

13. Method according to claim 12, **characterized in that** the data sources are data bases and image data sources.

14. Method according to claim 12 or 13, **characterized in that** a reference that refers to image data in the data source is employed as a block.

15. Method according to claim 14, **characterized in that** the image data of the blocks (26) are loaded by the second program module before the conversion, and **in that**
they are inserted into the print page instead of the reference.

16. Method according to one of the preceding claims, **characterized in that** some of the blocks (26) contain variable data.

17. Method according to claim 16, **characterized in that** the variable data are inserted into the print page (24) before the creation of the second image data of the blocks.

18. Method according to claim 16 or 17, **characterized in that** image data of blocks with variable data are created with the assistance of a third program module (32).

19. Method according to claim 18, **characterized in that** the created image data are output by the third program module (32) in a manner adapted to the output parameters of the output unit (18, 20).

20. Method according to claim 19, **characterized in that** the image data output by the third program module (32) in an adapted manner are added to the second image data converted block-by-block before the output of the image data on the output unit.

21. Method according to one of the preceding claims, **characterized in that** third program modules (32) are utilized for generating the second image data by means of the image processing procedures, particularly program modules (32) with whose assistance the first image data were created, and that the data exchange with the third program modules (32) takes place with the assistance of data exchange interfaces.

22. Method according to one of the preceding claims, **characterized in that** the first and the second program modules are processed in separate computing units (12, 14) of a data processing system.

23. Computer software comprising commands and data in encoded form that, after the loading of the computer software, cause a computer system to execute the steps cited in one of the claims 1 to 22.

24. Computer software according to claim 23, **characterized in that** it is stored on a storage medium.

25. System for creating and outputting at least one print page, comprising
- a first program module (28) for creating at least one print page (24) that contains a plurality of blocks,
each block (26) containing first image data of picture elements, and each block (26) being allocated a presentation parameter P that characterizes the image properties of this block (26),
- an output unit (18, 20) which is designed for outputting picture elements for the print page with the blocks on the basis of second image data, the image properties of the picture elements being determined by output parameters,
- a plurality of image processing procedures (30) that respectively generate second image data corresponding to the output parameter of the output unit (18, 20) from first image data,
- a second program module that selects one of the procedures (30) depending on the presentation parameter P and implements the image data conversion block-by-block.

## Revendications

1. Procédé d'élaboration et d'édition d'au moins une page d'impression, dans lequel :
au moins une page d'impression (24), qui contient plusieurs blocs (26), est élaborée à l'aide d'un premier module de programme (28),
chaque bloc (26) contient des premières données d'image d'éléments d'image, chaque bloc (26) étant associé à un paramètre de représentation P qui caractérise des propriétés d'image de ce bloc (26),
une unité d'édition (18, 20) édite des éléments d'image, dont les propriétés d'image sont déterminées par des paramètres d'édition, en se fondant sur des deuxièmes données d'image,
il est proposé plusieurs procédures de traitement d'image (30) qui génèrent chacune des deuxièmes données d'image à partir de premières données d'image conformément au paramètre d'édition de l'unité d'édition (18, 20),
un deuxième module de programme choisit l'une des procédures (30) en fonction du paramètre de représentation P et réalise bloc par bloc la conversion des données d'image,
et l'unité d'édition (18, 20) édite la page d'impression (24) avec les blocs (26).

2. Procédé selon la revendication 1, **caractérisé en ce que** la procédure de traitement d'image (30), choisie à l'aide du paramètre de représentation P et du paramètre d'édition, contient plusieurs procédures de conversion, l'ordre des procédures de conversion et le préréglage des procédures de conversion étant déterminés par le paramètre de représentation P.

3. Procédé selon la revendication 1 ou 2, **caractérisé en ce que** des modifications sont apportées aux données d'image lors de la procédure de traitement d'image (30) à l'aide de procédures d'adoucissement, d'accentuation, de lissage des bords, de lissage des lettres, de segmentation, de modification de la profondeur des couleurs, de modification de la résolution, de modification de la luminosité, de modification des contrastes et de modification de l'intensité des couleurs.

4. Procédé selon l'une des revendications précédentes, **caractérisé en ce que** les procédures de traitement d'image (30) tiennent compte, lors de la conversion des images en vue du tirage sur un appareil d'impression (18, 20), d'autres propriétés comme le type et la dureté du tambour de fixation, le format des données de l'appareil d'impression, les caractéristiques de rendement de l'unité de commande de l'appareil d'impression (18, 20) pour le traitement de l'image, et les propriétés du matériau de support ainsi que les réglages de la gestion des couleurs.

5. Procédé selon la revendication 3 ou 4, **caractérisé en ce que** les modifications apportées aux données d'image lors d'une première procédure de traitement d'image (30) sont effectuées avec des intensités différentes resp. avec d'autres préréglages par rapport aux modifications individuelles apportées aux données d'image lors d'autres procédures de traitement d'image (30).

6. Procédé selon l'une des revendications précédentes, **caractérisé en ce que** le paramètre de représentation P est déterminé lors de l'élaboration de la page d'impression (24).

7. Procédé selon l'une des revendications précédentes, **caractérisé en ce que** l'une des pages d'impression indépendantes (24) des paramètres de l'unité d'édition (18, 28) est élaborée à l'aide du premier module de programme (28).

8. Procédé selon l'une des revendications précédentes, **caractérisé en ce que** l'unité d'édition (18, 20) est un dispositif d'impression.

9. Procédé selon l'une des revendications précédentes, **caractérisé en ce que** les blocs contiennent des éléments graphiques tels que du texte, des graphiques vectoriels, des graphiques commerciaux, des images, des tableaux, des photos de paysage et/ou des photos de portrait.

10. Procédé selon l'une des revendications précédentes, **caractérisé en ce que** les paramètres d'édition sont la résolution, la profondeur de couleur, le type et la version du logiciel d'impression, le protocole d'impression, la capacité de traitement d'images, le type de tambour, et le médium d'édition de l'unité d'édition.

11. Procédé selon l'une des revendications précédentes, **caractérisé en ce que** le premier module de programme est un module de traitement de texte, un module de programme DTP, ou un générateur de formulaire.

12. Procédé selon l'une des revendications précédentes, **caractérisé en ce que** les données d'image des blocs (26) sont insérées à partir de sources de données.

13. Procédé selon la revendication 12, **caractérisé en ce que** les sources de données sont des bases de données et de sources de données d'images.

14. Procédé selon la revendication 12 ou 13, **caractérisé en ce qu'**on utilise comme bloc une référence aux données d'image dans la source de données.

15. Procédé selon la revendication 14, **caractérisé en ce que** les données d'image des blocs (26) sont chargées par le deuxième module de programmation avant la conversion, et **en ce qu'**elles sont insérées dans la page d'impression à la place de la référence.

16. Procédé selon l'une des revendications précédentes, **caractérisé en ce qu'**une partie des blocs (26) contient des données variables.

17. Procédé selon la revendication 16, **caractérisé en ce que** les données variables sont insérées dans la page d'impression (24) avant de générer les deuxièmes données d'image des blocs.

18. Procédé selon la revendication 16 ou 17, **caractérisé en ce que** des données d'image de blocs contenant des données variables sont élaborées à l'aide d'un troisième module de programme (32).

19. Procédé selon la revendication 18, **caractérisé en ce que** les données d'image élaborées sont éditées par le troisième module de programme (32) en étant adaptées aux paramètres d'édition de l'unité d'édition (18, 20).

20. Procédé selon la revendication 19, **caractérisé en ce que** l'on ajoute les données d'image éditées de façon adaptée par le troisième module de programme (32) aux deuxièmes données d'image converties par bloc avant l'édition des données d'image sur l'unité d'édition.

21. Procédé selon l'une des revendications précédentes, **caractérisé en ce que**, pour générer les deuxièmes données d'image via les procédures de traitement d'image, on utilise des troisièmes modules de programme (32), en particulier des modules de programmation (32), permettant d'élaborer les premières données d'image et d'effectuer l'échange de données avec les troisièmes modules de programme (32) à l'aide d'interfaces d'échange de données.

22. Procédé selon l'une des revendications précédentes, **caractérisé en ce que** le premier module de programme et le deuxième module de programme sont traités dans des unités de calcul séparées (12, 14) d'un système de traitement de données.

23. Logiciel, comportant des ordres et des données sous forme codées qui ordonnent à un système informatique, après le chargement du logiciel, de mettre en oeuvre les étapes mentionnées dans les revendications 1 à 22.

24. Logiciel selon la revendication 23, **caractérisé en ce qu'**il est mémorisé sur un support de mémorisation.

25. Système d'élaboration et d'édition d'au moins une page d'impression comportant :
- un premier module de programme (28) destiné à élaborer au moins une page d'impression (24) qui contient plusieurs blocs, où chaque bloc (26) contient des premières données d'image d'éléments d'image et chaque bloc (26) est associé à un paramètre de représentation P qui caractérise des propriétés d'image de ce bloc (26),
- une unité d'édition (18, 20) qui est étudiée pour éditer, pour la page d'impression avec les blocs, des éléments d'image dont les propriétés d'image sont déterminées par des paramètres d'édition, en se fondant sur des deuxièmes données d'image,
- plusieurs procédures de traitement d'image (30) qui génèrent chacune des deuxièmes données d'image à partir de premières données d'image conformément au paramètre d'édition de l'unité d'édition (18, 20),
- un deuxième module de programme qui choisit l'une des procédures (30) en fonction du paramètre de représentation P et qui réalise bloc par bloc la conversion des données d'image.
